# FASCICULE DE BREVET EUROPEEN

(11) **EP 0 838 188 B1**
(45) Date de publication et mention de la délivrance du brevet: **05.01.2000**
(21) Numéro de dépôt: 97420195.6
(22) Date de dépôt: 21.10.1997
(51) Int. Cl.: A47J 39/00

(54) **Plateau pour mise à température d'aliments**
Speisetablett zum Erwärmen von Nahrungsmitteln
Tray for heating food items

(30) Priorité: 24.10.1996 FR 9613155
(43) Date de publication de la demande: 29.04.1998
(73) Titulaire: SOCIETE COOPERATIVE DE PRODUCTION BOURGEOIS, 74210 Faverges (FR)
(72) Inventeur: Violi, Jean-Charles, 74210 Marlens (FR); Violi, Raymond, 74210 Marlens (FR); Ferbus, Jean-François, 74210 Seythenex (FR)
(74) Mandataire: Poncet, Jean-François

(56) Documents cités:
- EP-A- 0 203 883
- EP-A- 0 666 047
- DE-A- 3 637 660
- DE-A- 19 507 083
- FR-A- 2 375 853
- FR-A- 2 383 637
- FR-A- 2 738 136

## Description

La présente invention concerne les dispositifs permettant de mettre à température des aliments disposés sur des plateaux repas, notamment pour la distribution de repas dans les collectivités, les cantines d'entreprises, les hôpitaux.

L'invention vise plus spécialement de tels dispositifs dans lesquels la mise à température des aliments est assurée par chauffage à induction.

On connaît déjà de tels dispositifs de mise à température des aliments, décrits par exemple dans le document FR-A-2 383 637, comprenant des moyens pour supporter une série de plateaux les uns au-dessus des autres selon un écartement approprié, et une série de tablettes d'induction contenant des bobines d'induction connectées à un générateur haute fréquence, les tablettes d'induction venant s'engager entre les plateaux successifs dans une zone de réchauffage des plateaux.

Les aliments à réchauffer sont disposés sur des écuelles en aluminium mince posées sur un plateau en matière isolante, les écuelles étant surmontées d'une cloche amovible isolante dont la face intérieure est revêtue d'une feuille métallique.

Dans la zone de réchauffage des plateaux, les bobines d'induction parcourues par un courant électrique alternatif à haute fréquence génèrent un champ magnétique alternatif à haute fréquence qui échauffe par induction magnétique l'écuelle en aluminium mince et la face inférieure métallique de la cloche.

Un tel dispositif nécessite de disposer d'écuelles en aluminium. Outre le fait que cela complique considérablement les opérations de nettoyage ou nécessite de jeter les écuelles après usage, les aliments sont contenus directement dans l'écuelle en aluminium mince qui constitue un contenant peu agréable pour le consommateur et susceptible d'être dégradé par la manipulation nécessaire des couverts lors de l'utilisation.

On constate en outre un manque de rapidité de mise à température, et une répartition inégale de la chaleur.

Une répartition inégale de chaleur est également constatée avec le dispositif à plaques en acier magnétique décrit dans le document EP-A-0 666 047, avec le dispositif à chauffage par résistance électrique inférieure décrit dans le document FR-A-2 375 853, avec le dispositif à cloche munie d'une plaque métallique intérieure chauffante anti-condensation décrit dans le document DE-A-195 07 083, ou avec les récipients à plaques métalliques externes inférieure et périphérique décrits dans le document EP-A-0 203 883.

Le problème proposé par la présente invention est de concevoir une nouvelle structure de plateau repas pour mise à température d'aliments par induction magnétique, dans laquelle on peut utiliser tout type d'assiette ou autre contenant d'aliments, et qui assure une augmentation sensible de la rapidité de remise à température et une répartition régulière de la chaleur dans les aliments.

Le plateau repas selon l'invention doit présenter en outre des qualités satisfaisantes au regard des normes d'hygiène, permettant un nettoyage efficace et évitant tout risque de développement de bactéries et autres éléments polluants.

En outre, la structure de plateau repas doit pouvoir être produite à coût raisonnable.

Pour atteindre ces objets ainsi que d'autres, un plateau pour mise à température d'aliments selon l'invention permet la mise à température par insertion dans un champ d'induction magnétique alternatif produit par un dispositif générateur extérieur d'induction magnétique. Le plateau selon l'invention comprend un corps de plateau inférieur et une cloche supérieure amovible pouvant être posée sur une partie au moins du plateau pour délimiter, entre le corps de plateau et la cloche, un espace intérieur entouré d'une paroi périphérique et pouvant contenir lesdits aliments à mettre à température, avec au moins un élément en matériau réchauffable par induction magnétique placé dans l'espace intérieur ; le corps de plateau comprend une structure de base en matière plastique formant une surface externe inférieure et des bords et comportant, au moins sur la partie recevant la cloche, une couche supérieure de diffusion en métal non magnétique bon conducteur de la chaleur rapportée sur la structure de base ; la cloche comprend une enveloppe externe en matière plastique solidaire d'une couche inférieure de diffusion en métal non magnétique bon conducteur de la chaleur, elle-même en contact d'au moins un élément intermédiaire en matériau réchauffable par induction magnétique ; la couche supérieure de diffusion du corps de plateau vient au contact de la couche inférieure de diffusion de cloche en périphérie de l'espace intérieur selon des portions de rebords périphériques de contact respectives des couches supérieure et inférieure de diffusion.

On constate qu'une telle structure répartit beaucoup mieux la chaleur dans les aliments, en évitant les points chauds susceptibles d'assurer une cuisson excessive des aliments en certaines zones, tout en assurant une mise à température globale rapide. La diffusion de chaleur est efficace, et la structure assure un bon couplage magnétique avec les bobines produisant le champ magnétique.

Selon un mode de réalisation avantageux, au moins deux orifices sont ménagés en des zones opposées de partie inférieure de paroi périphérique entourant l'espace intérieur. Lors de la remise à température, ces orifices assurent la sortie d'air froid, de sorte que l'air échauffé par les éléments réchauffables par induction magnétique et les couches de diffusion peut occuper rapidement la totalité de l'espace intérieur, pour participer à l'échauffement des aliments par conduction et convection. La remise à température est ainsi considérablement accélérée, et l'on a pu constater un gain de 20 à 50% du temps de remise à température.

De préférence, les orifices sont des encoches ou des déformations ménagées dans le bord de contact de la cloche ou du corps de plateau. Les formes en encoche ou déformation sont beaucoup plus faciles à nettoyer, et permettent de garantir le respect des conditions d'hygiène.

Pour permettre une production à faible coût, le corps de plateau peut avantageusement comprendre une structure de base en matière plastique thermodurcissable associée à la couche de diffusion préformée, les bords de ladite couche de diffusion étant sertis dans la matière plastique de structure de base.

La cloche peut comprendre une enveloppe externe en matière plastique associée à la couche de diffusion préformée, les bords de ladite enveloppe externe étant collés dans un rebord replié de la couche de diffusion.

Selon une réalisation avantageuse, assurant une bonne isolation thermique de l'espace intérieur et diminuant l'échauffement de la partie externe de cloche en matière plastique, l'enveloppe externe et la couche de diffusion de cloche sont solidarisées selon leurs bords, en laissant une lame d'air entre l'enveloppe externe et la couche de diffusion dans la partie centrale de cloche.

D'autres objets, caractéristiques et avantages de la présente invention ressortiront de la description suivante de modes de réalisation particuliers, faite en relation avec les figures jointes, parmi lesquelles:
- la figure 1 est une vue de dessus d'un plateau repas selon un mode de réalisation de la présente invention ;
- la figure 2 est une coupe longitudinale selon le plan A-A de la figure 1 ;
- la figure 3 est une coupe transversale à plus grande échelle selon le plan B-B de la figure 1 ;
- la figure 4 est une vue de dessous d'une cloche selon un mode de réalisation de la présente invention ;
- la figure 5 est une coupe transversale selon le plan C-C de la figure 4 ;
- la figure 6 est une vue de face de la cloche de la figure 4 ;
- la figure 7 est une vue de côté gauche de la cloche de la figure 4 ;
- la figure 8 est une vue en bout, prise du côté droit de la figure 2, cloche enlevée, montrant le profil transversal du corps de plateau ;
- la figure 9 est une coupe transversale du plateau selon le plan E-E de la figure 1, cloche enlevée ;
- la figure 10 est une vue en perspective d'un chariot selon un mode de réalisation adapté pour le transport des plateaux repas selon la présente invention ; et
- la figure 11 est une vue en perspective d'une ccnsole adaptée pour coopérer avec le chariot de la figure 10.

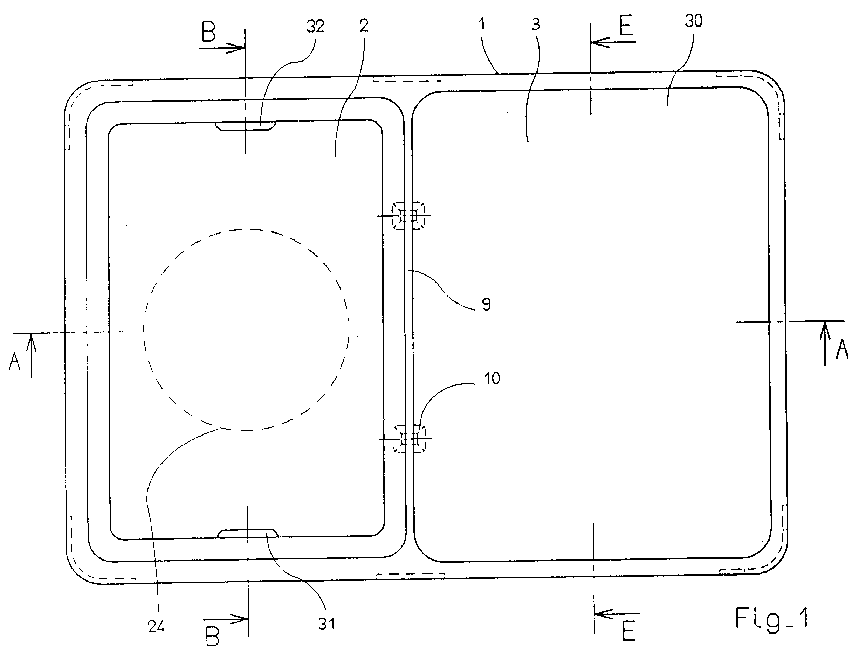

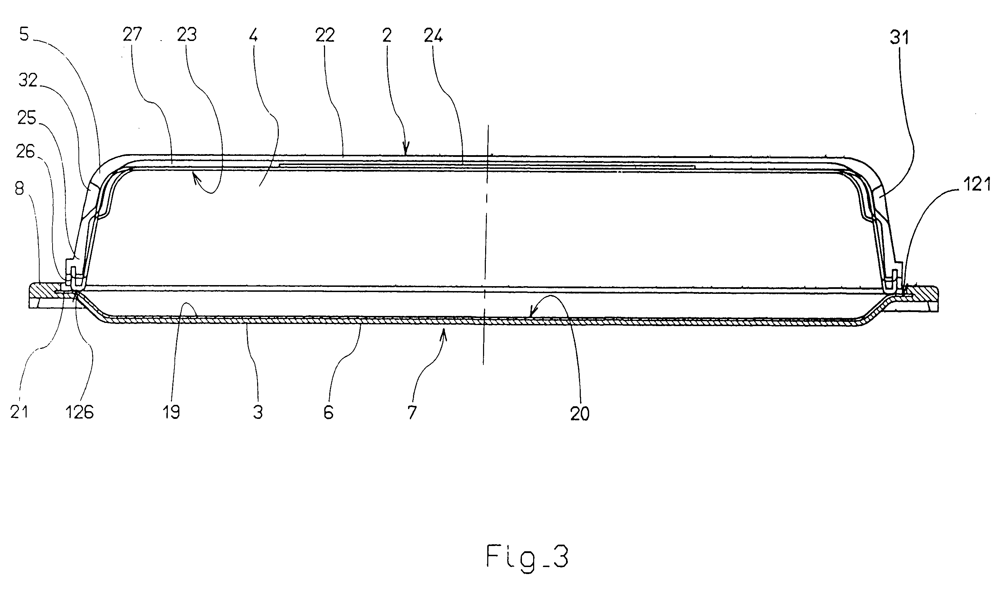

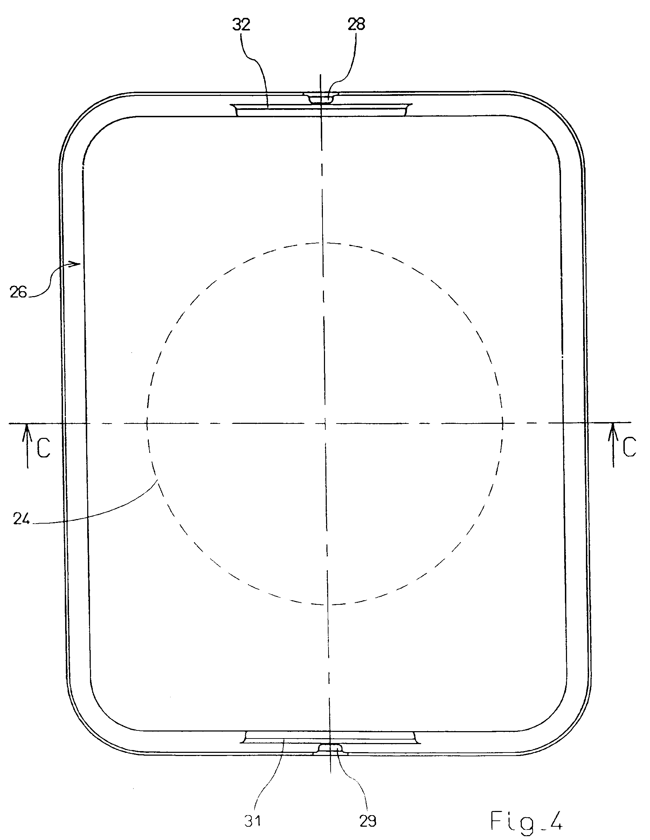

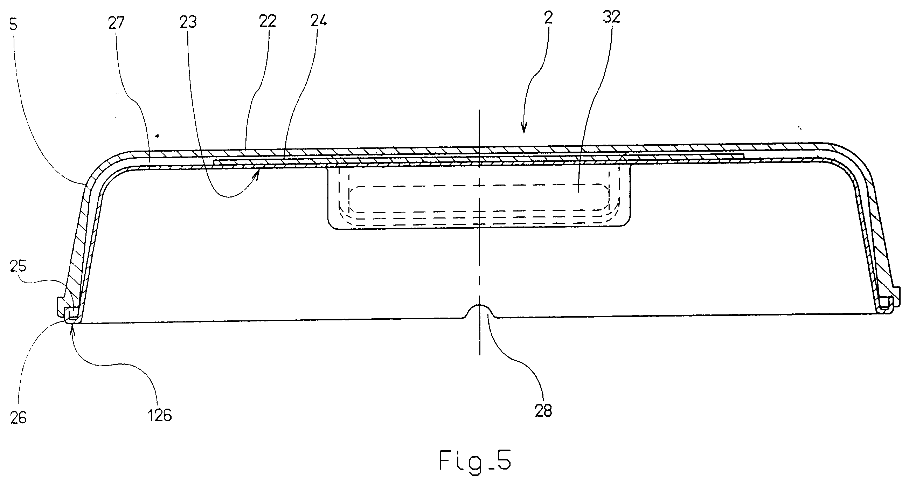

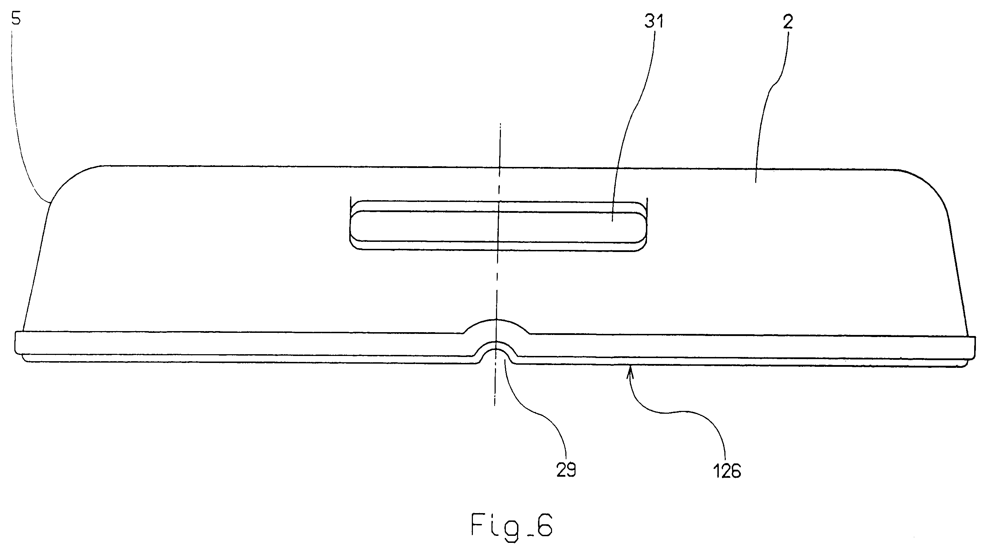

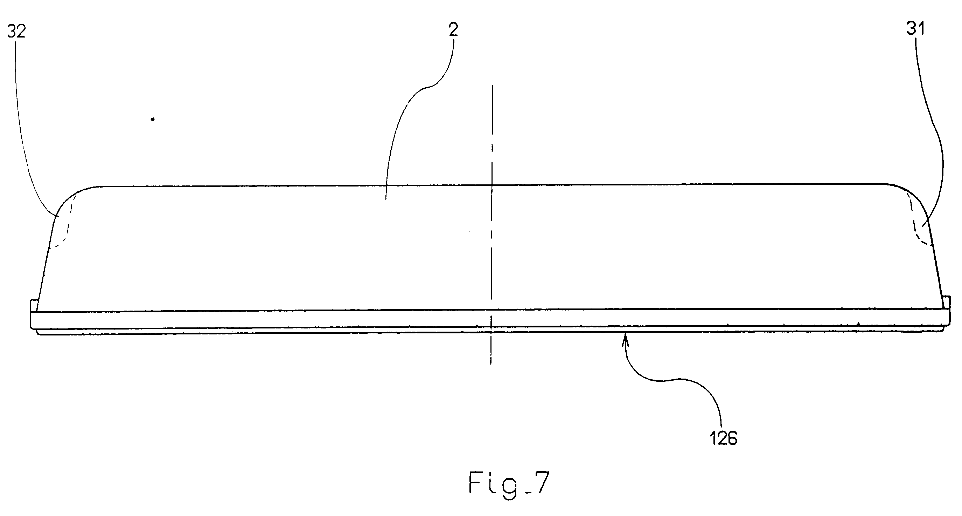

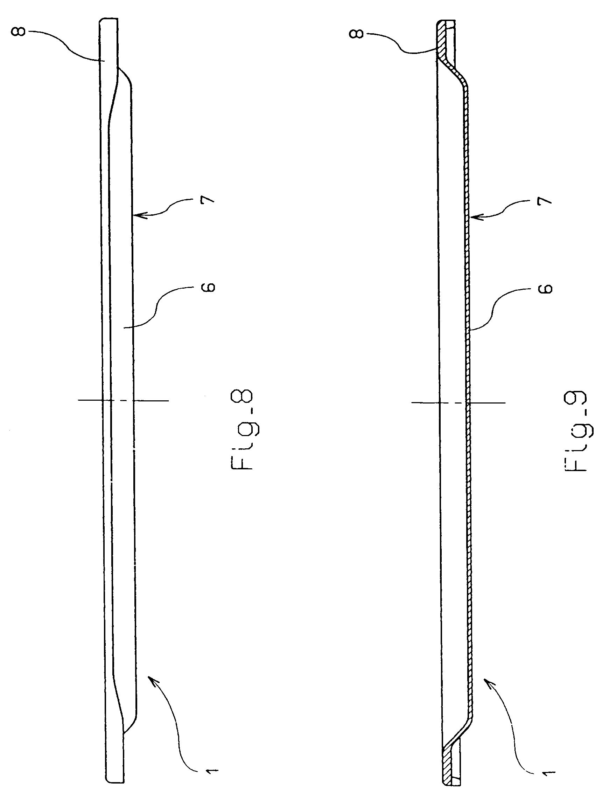

Dans le mode de réalisation illustré sur les figures 1 à 9, un plateau pour mise à température d'aliments selon l'invention comprend un corps de plateau 1 inférieur et une cloche 2 supérieure amovible pouvant être posée sur une partie au moins 3 du plateau pour délimiter, entre le corps de plateau 1 et la cloche 2, un espace intérieur 4 entouré d'une paroi périphérique 5 et pouvant contenir des aliments à mettre à température.

Le corps de plateau 1 comprend une structure de base 6 en matière plastique formant une surface externe inférieure 7 et des bords 8. La structure de base 6, dans le mode de réalisation représenté, comporte deux parties qui sont chacune en forme générale de cuvette, à savoir la première partie 3 destinée à recevoir la cloche 2 recouvrant les aliments devant être réchauffés, et une seconde partie 30 destinée à supporter les aliments devant rester froids.

Les deux parties 3 et 30 en cuvette du corps de plateau 1 sont reliées par une zone intermédiaire 9 relevée munie d'éléments raidisseurs 10 tels que des nervures.

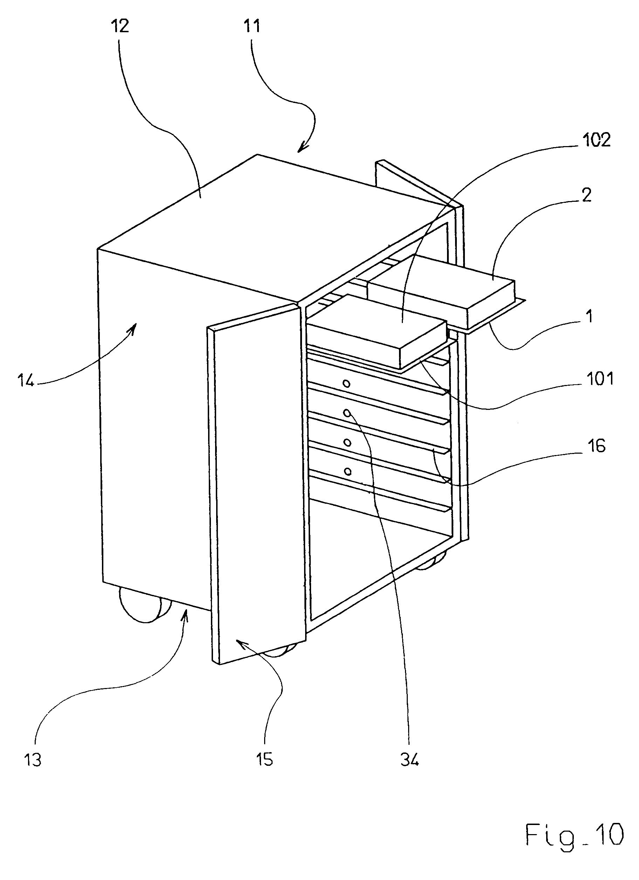

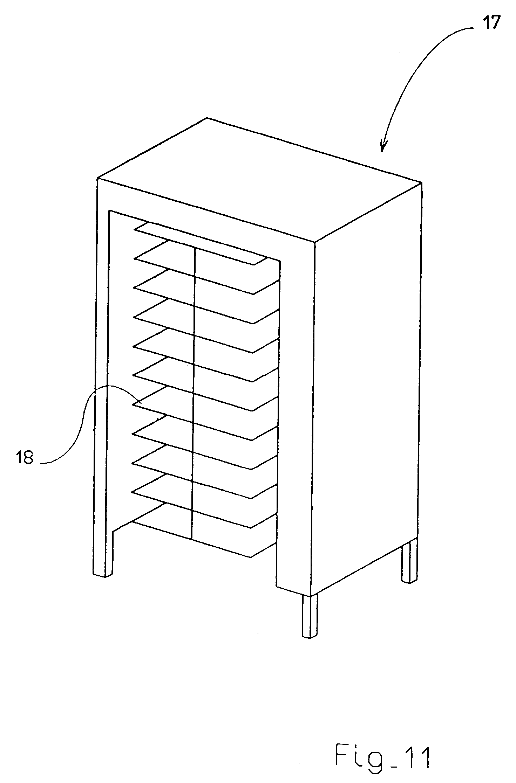

Comme le représentent les figures 10 et 11, un plateau de mise à température d'aliments selon l'invention est destiné à être utilisé pour la remise à température d'aliments par insertion dans un champ d'induction magnétique alternatif produit par un dispositif générateur extérieur d'induction magnétique. Par exemple, le plateau précédemment décrit, comportant le corps de plateau 1 et la cloche 2, peut être engagé dans des glissières 16 prévues dans un chariot 11 mobile. Le chariot 11 est fermé par des parois supérieure 12, inférieure 13, et par une paroi périphérique 14 comportant au moins une porte frontale 15. On peut par exemple prévoir un chariot 11 permettant, à chaque étage, de placer côte à côte deux corps de plateau tels que les corps de plateau 1 et 101, pouvant porter des cloches telles que des cloches 2 et 102. Les plateaux sont montés sur des glissières telles que la glissière 16, permettant de les faire coulisser longitudinalement pour le service.

En position d'accouplement pour la remise en température, on vient placer le chariot 11, porte 15 ouverte, contre l'ouverture d'une console fixe 17 illustrée sur la figure 11. La console fixe 17 comporte une série de tablettes d'induction horizontales telles que la tablette 18, lesdites tablettes venant s'engager à l'intérieur du chariot 11 entre les zones de plateau munies des cloches 2 ou 102. Les tablettes d'induction 18 comportent des bobines d'induction magnétique connectées à un générateur de courant électrique alternatif haute fréquence logé dans la console fixe 17, et permettent de générer un champ magnétique haute fréquence dans l'espace où est engagée la première partie 3 des plateaux comportant les cloches 2. On peut utiliser, par exemple, un dispositif de génération de champ magnétique tel que décrit dans le document FR 2 383 637 A ou tout autre type de dispositif générant un champ magnétique à fréquence appropriée pour échauffer par induction magnétique des éléments en matériau réchauffable par induction magnétique.

En se référant à nouveau aux figures 1 à 3, 8 et 9, la structure de base 6 du corps de plateau 1 comporte, sur la partie 3 recevant la cloche 2, une couche supérieure de diffusion 19 en métal non magnétique bon conducteur de la chaleur, par exemple en aluminium, rapportée sur la structure de base 6. La couche supérieure de diffusion 19 peut avantageusement être recouverte, sur au moins sa face apparente 20, d'une couche de polytétrafluoréthylène noir ou d'émail noir, favorisant le rayonnement thermique vers les aliments.

La structure de base 6 en matière plastique peut être constituée à partir d'un flan de matière plastique thermodurcissable que l'on emboutit à froid avant durcissement sur la couche de diffusion 19 préformée en cuvette. Pendant l'emboutissage, les bords 21 de ladite couche de diffusion 19 sont sertis dans la matière plastique de structure de base 6, assurant la solidarisation mécanique et l'étanchéité entre la structure de base 6 et la couche de diffusion 19. La matière plastique est ensuite échauffée à température appropriée pour assurer son durcissement. Les opérations d'emboutissage et d'échauffement peuvent être simultanées.

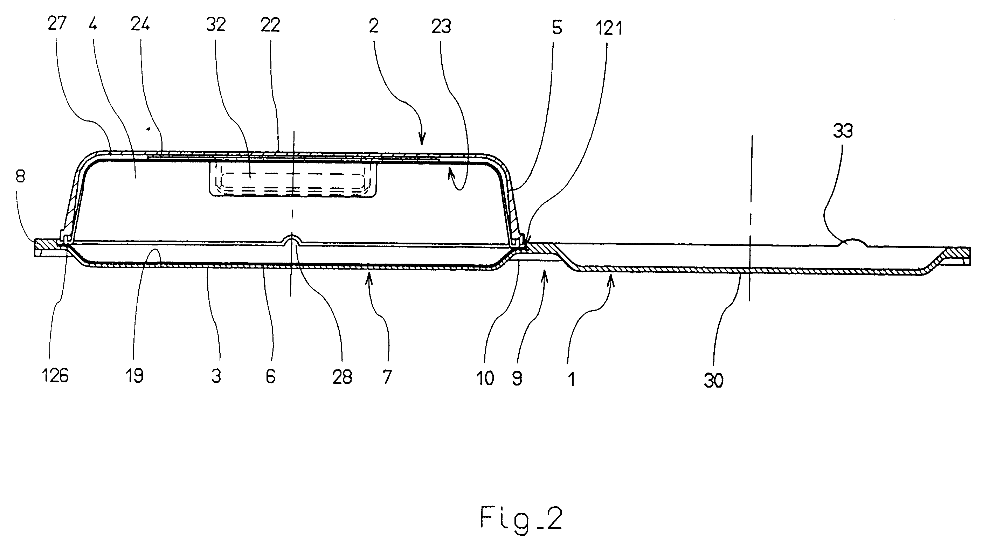

Comme on le voit sur les figures 2 à 7, la cloche 2 comprend une enveloppe externe 22 en matière plastique, par exemple en matière plastique thermodurcissable, solidaire d'une couche inférieure de diffusion 23 en métal non magnétique bon conducteur de la chaleur, par exemple en aluminium, à face apparente recouverte de polytétrafluoréthylène noir ou d'émail noir. La couche inférieure de diffusion 23 est elle-même en contact avec au moins un élément intermédiaire en matériau réchauffable par induction magnétique 24, logé entre ladite couche inférieure de diffusion 23 et l'enveloppe externe 22. Un tel élément intermédiaire en matériau réchauffable par induction magnétique 24 peut également être appelé élément suscepteur. Lorsqu'il est placé dans un champ magnétique alternatif à haute fréquence, un tel élément est le siège d'apparition de courants électriques induits qui, en présence d'une résistivité appropriée de l'élément, échauffent l'élément.

Selon un mode de réalisation avantageux de l'invention, l'élément en matériau réchauffable par induction magnétique 24 est en un acier inoxydable ferritique de qualité alimentaire, par exemple en acier de type F17.

Un tel élément en matériau réchauffable par induction magnétique 24 peut être sous forme d'une plaque perforée solidarisée par emboutissage à la couche correspondante de diffusion 23.

La couche inférieure de diffusion 23 est elle-même conformée en cloche par emboutissage, avec un bord périphérique 26 replié en U vers le haut pour former une gorge périphérique. L'enveloppe externe 22 en matière plastique peut être réalisée séparément à partir d'un flan de matière plastique thermodurcissable, que l'on forme par tout procédé approprié en assurant son durcissement. Le bord périphérique d'enveloppe externe 22 comporte une fente annulaire inférieure dont une lèvre intérieure est conformée pour s'engager dans la gorge périphérique de couche inférieure de diffusion 23. Pour l'assemblage, on dépose un cordon de colle alimentaire, par exemple en silicone alimentaire, dans la gorge périphérique de couche inférieure de diffusion 23, et on engage sur celle-ci en force le bord périphérique d'enveloppe externe 22.

Dans le mode de réalisation illustré sur les figures 2, 3 et 5, l'enveloppe externe 22 et la couche de diffusion 23 de la cloche 2 sont solidarisées par collage selon leurs bords respectifs 25 et 26, en laissant une lame d'air 27 entre l'enveloppe externe 22 et la couche de diffusion 23 dans la partie centrale de cloche 2. La lame d'air 27 participe à l'isolation thermique de la cloche, évitant la diffusion thermique vers l'extérieur et l'échauffement excessif de l'enveloppe externe 22 de la cloche 2, et favorisant l'échauffement de la couche de diffusion 23.

Dans le mode de réalisation illustré, l'élément intermédiaire en matériau réchauffable par induction magnétique 24 est un disque perforé placé dans la zone centrale de paroi supérieure de cloche 2, ladite zone centrale de paroi supérieure de cloche 2 étant généralement plane. Un tel mode de réalisation est adapté pour coopérer avec des tablettes d'induction intermédiaires planes telles que la tablette 18 de la console 17 illustrée sur la figure 11.

En alternative, on peut concevoir de disposer les éléments en matériau réchauffable par induction magnétique 24 en périphérie de la cloche 2, c'est-à-dire répartis selon sa paroi latérale 5. Dans ce cas, la cloche est adaptée pour coopérer avec des moyens générateurs de champ magnétique qui sont disposés selon les parois latérales d'une enceinte de réchauffage conformée pour recevoir au moins un plateau repas muni d'une cloche.

Comme on le voit sur les figures 2, 4 à 6, on a prévu au moins deux orifices 28 et 29 ménagés en des zones opposées de partie inférieure de paroi périphérique 5 entourant l'espace intérieur 4.

Dans le mode de réalisation illustré sur les figures, les orifices 28 et 29 sont des encoches ou des déformations ménagées dans le bord de contact de la cloche 2, ou bord destiné à reposer sur le corps de plateau 1. Les encoches ou déformations illustrées ont une section semi-circulaire dont le rayon est d'environ 4 millimètres. En alternative, on peut prévoir des encoches ou déformations similaires ménagées dans le bord de corps de plateau 1 sur lequel vient s'appuyer un bord plan de cloche 2.

Dans le mode de réalisation illustré sur les figures, la structure de base 6 du corps de plateau 1 comporte un rebord périphérique supérieur plat 8, se développant selon un plan horizontal, et la couche supérieure de diffusion 19 comporte elle-même un rebord périphérique supérieur plat 21 dont seule la partie d'extrémité périphérique est sertie dans la matière plastique de structure de base 6. Ainsi, une portion du rebord 21 définit une bande périphérique 121 dont la face supérieure est dégagée, accessible pour supporter elle-même le bord inférieur de cloche 2.

Simultanément, dans la cloche 2, le rebord périphérique inférieur replié 26 de la couche de diffusion 23 présente une facette périphérique inférieure plane 126, formant une bande ayant par exemple une largeur de 2 à 3 millimètres, et venant en appui sur la bande périphérique 121 dégagée du rebord 21 de couche supérieure de diffusion 19. Ainsi, la couche supérieure de diffusion 19 du corps de plateau 1 vient au contact de la couche inférieure de diffusion 23 de cloche en périphérie de l'espace fermé 4 selon des portions de rebords périphériques 121 et 126 de contact plates respectives des couches supérieure 19 et inférieure 23 de diffusion. Ce contact permet l'échauffement de la couche supérieure de diffusion 19 du corps de plateau 1, par conduction thermique, depuis l'élément intermédiaire en matériau réchauffable par induction magnétique 24, en passant par la couche inférieure de diffusion 23 de cloche.

En variante, les portions de rebords périphériques 121 et 126 peuvent être coniques, toriques ou de tout autre profil autorisant un bon contact des portions de rebords périphériques 121 et 126 l'une sur l'autre.

Dans le mode de réalisation illustré, la face supérieure de cloche 2 est généralement plate et rectangulaire. Deux déformations concaves 31 et 32 sont ménagées dans les petites faces latérales, pour constituer des poignées de préhension.

Dans le mode de réalisation illustré sur les figures 1 et 2, le plateau repas comporte une zone de réchauffage d'aliments 3 munie desdites couches de diffusion 19 et 23 et de ladite couche de matériau réchauffable par induction 24, et une zone distincte 30 dépourvue de couche de diffusion et de matériau réchauffable par induction. Le corps de plateau 1 comporte un rebord 8 périphérique généralement plat, conformé pour s'engager dans les glissières 16 du chariot 11 illustrées sur la figure 10. Le rebord 8 peut avantageusement comporter des excroissances ou déformations 33, obligeant à introduire le corps de plateau 1 dans un sens longitudinal déterminé dans les glissières 16 de façon à positionner la zone de réchauffage d'aliments 3 au droit des moyens générateurs d'induction magnétique tels que les tablettes 18 de la console 17. Par exemple, on a représenté sur la figure 10 des ergots tels que l'ergot 34, associé à la glissière 16, formant butée pour empêcher l'introduction du plateau repas dans l'autre sens longitudinal.

La présente invention n'est pas limitée aux modes de réalisation qui ont été explicitement décrits, mais elle en inclut les diverses variantes et généralisations contenues dans le domaine des revendications ci-après.

## Revendications

1. Plateau pour mise à température d'aliments par insertion dans un champ d'induction magnétique alternatif produit par un dispositif générateur extérieur d'induction magnétique, comprenant un corps de plateau (1) inférieur et une cloche (2) supérieure amovible pouvant être posée sur une partie au moins (3) du plateau pour délimiter, entre le corps de plateau (1) et la cloche (2), un espace intérieur (4) entouré d'une paroi périphérique (5) et pouvant contenir lesdits aliments à mettre à température, avec au moins un élément intermédiare en matériau réchauffable par induction magnétique (24) placé dans l'espace intérieur (4), caractérisé en ce que :
- le corps de plateau (1) comprend une structure de base (6) en matière plastique formant une surface externe inférieure (7) et des bords (8) et comportant, au moins sur la partie (3) recevant la cloche (2), une couche supérieure de diffusion (19) en métal non magnétique bon conducteur de la chaleur rapportée sur la structure de base (6),
- la cloche (2) comprend une enveloppe externe (22) en matière plastique solidaire d'une couche inférieure de diffusion (23) en métal non magnétique bon conducteur de la chaleur, elle-même en contact avec au moins un élément intermédiaire en matériau réchauffable par induction magnétique (24),
- la couche supérieure de diffusion (19) du corps de plateau (1) vient au contact de la couche inférieure de diffusion (23) de cloche (2) en périphérie de l'espace intérieur (4) selon des portions de rebords périphériques de contact respectives (121, 126) des couches supérieure (19) et inférieure (23) de diffusion.

2. Plateau selon la revendication 1, caractérisé en ce qu'au moins deux orifices (28, 29) sont ménagés en des zones opposées de partie inférieure de paroi périphérique (5) entourant l'espace intérieur (4).

3. Plateau selon la revendication 2, caractérisé en ce que les orifices (28, 29) sont des encoches ou des déformations ménagées dans le bord de contact de la cloche (2) ou du corps de plateau (1).

4. Plateau selon l'une quelconque des revendications 1 à 3, caractérisé en ce que les couches de diffusion (19, 23) sont en aluminium.

5. Plateau selon la revendication 4, caractérisé en ce que les couches de diffusion (19, 23) sont recouvertes, sur au moins leur face apparente (20), avec une couche de polytétrafluoréthylène noir ou d'émail noir.

6. Plateau selon l'une quelconque des revendications 1 à 5, caractérisé en ce que l'élément en matériau réchauffable par induction magnétique (24) est en acier inoxydable ferritique de type F17.

7. Plateau selon l'une quelconque des revendications 1 à 6, caractérisé en ce que l'élément en matériau réchauffable par induction magnétique (24) est solidarisé par emboutissage à la couche correspondante de diffusion (23).

8. Plateau selon l'une quelconque des revendications 1 à 7, caractérisé en ce que le corps de plateau (1) comprend une structure de base (6) en matière plastique thermodurcissable associée à la couche de diffusion (19) préformée, les bords (21) de ladite couche de diffusion (19) étant sertis dans la matière plastique de structure de base (6).

9. Plateau selon l'une quelconque des revendications 1 à 8, caractérisé en ce que la cloche (2) comprend une enveloppe externe (22) en matière plastique associée à la couche de diffusion (23) préformée, les bords (25) de ladite enveloppe externe (22) étant collés dans un rebord replié (26) de la couche de diffusion (23).

10. Plateau selon l'une quelconque des revendications 1 à 9, caractérisé en ce que l'enveloppe externe (22) et la couche de diffusion (23) de cloche (2) sont solidarisées selon leurs bords, en laissant une lame d'air (27) entre l'enveloppe externe (22) et la couche de diffusion (23) dans la partie centrale de cloche (2).

11. Plateau selon l'une quelconque des revendications 1 à 10, caractérisé en ce qu'il comporte une zone de réchauffage d'aliments (3) munie desdites couches de diffusion (19, 23) et de ladite couche de matériau réchauffable par induction (24), et une zone distincte (30) dépourvue desdites couches de diffusion et de matériau réchauffable par induction, le corps de plateau (1) comportant un rebord (8) périphérique généralement plat conformé pour s'engager dans des glissières (16) d'un chariot support (11), et le rebord (8) comportant des excroissances ou des déformations (33) obligeant à introduire le corps de plateau (1) dans un sens déterminé dans les glissières (16) pour positionner la zone de réchauffage d'aliments (3) au droit de moyens générateurs d'induction magnétique (18) d'une console fixe (17).

## Claims

1. Tray for heating food by insertion in an alternating magnetic induction field produced by an external magnetic field generator device, comprising a lower tray body (1) and a removable upper cloche (2) that can be placed on at least a part (3) of the tray to delimit an interior space (4), between the tray body (1) and the cloche (2), surrounded by a peripheral wall (5) and able to contain said food to be heated, with at least one intermediate member (24) made from a material that can be heated by magnetic induction placed in the interior space (4), characterised in that:
- the tray body (1) has a plastics material base structure (6) forming a bottom exterior surface (7) and edges (8) and including, at least on the part (3) receiving the cloche (2), a top diffusion layer (19) of a non-magnetic metal that is a good conductor of heat attached to the base structure (6),
- the cloche (2) has a plastics material outer jacket (22) fastened to a bottom diffusion layer (23) made of a non-magnetic metal that is a good conductor heat, itself in contact with at least one intermediate member (24) made from a material that can be heated by magnetic induction,
- the top diffusion layer (19) of the tray body (1) comes into contact with the bottom diffusion layer (23) of the cloche (2) at the periphery of the interior space (4) in portions of respective peripheral contact rims (121, 126) of the top and bottom diffusion layers (19, 23).

2. Tray according to claim 1, characterised in that at least two orifices (28, 29) are formed in opposite areas of the lower part of the peripheral wall (5) around the interior space (4).

3. Tray according to claim 2, characterised in that the orifices (28, 29) are notches or deformations in the contact edge of the cloche (2) or the tray body (1).

4. Tray according to any one of claims 1 to 3, characterised in that the diffusion layers (19, 23) are of aluminium.

5. Tray according to claim 4, characterised in that the diffusion layers (19, 23) are covered, at least on their visible side (20), with a layer of black polytetrafluorethylene or black enamel.

6. Tray according to any one of claims 1 to 5, characterised in that the member (24) made from a material that can be heated by magnetic induction is made of F17 type ferritic stainless steel.

7. Tray according to any one of claims 1 to 6, characterised in that the member (24) made of material that can be heated by magnetic induction is pressed onto the corresponding diffusion layer (23) to attach it thereto.

8. Tray according to any one of claims 1 to 7, characterised in that the tray body (1) has a thermosetting plastics material base structure (6) associated with the preformed diffusion layer (19), the edges (21) of said diffusion layer (19) being embedded in the plastics material of the base structure (6).

9. Tray according to any one of claims 1 to 8, characterised in that the cloche (2) has a plastics material outer jacket (22) associated with the preformed diffusion layer (23), the edges (25) of said outer jacket (22) being glued to an upstanding rim (26) of the diffusion layer (23).

10. Tray according to any one of claims 1 to 9, characterised in that the outer jacket (22) and the diffusion layer (23) of the cloche (2) are fastened together at their edges, leaving a thin layer (27) of air between the outer jacket (22) and the diffusion layer (23) in the central part of the cloche (2).

11. Tray according to any one of claims 1 to 10, characterised in that it has a food heating area (3) provided with said diffusion layer (19, 23) and said layer (24) of a material that can be heated by magnetic induction, and a separate area (30) where there is no diffusion layer and no material that can be heated by magnetic induction, the tray body (1) having a generally flat peripheral rim (8) shaped to engage in slides (16) of a support trolley (11), and the rim (8) having excrescences or deformations (33) making it obligatory to introduce the tray body (1) in a particular direction into the slides (16) to position the food heating area (3) in line with magnetic field generator means (18) of a fixed console (17).

## Patentansprüche

1. Tablett zum Erwärmen Von Nahrungsmitteln durch ein Einsetzen in ein Wechselstrom-Magnetfeld, welches durch eine äußere Erzeugervorrichtung einer magnetischen Induktion erzeugt ist, bestehend aus einem tiefgesetzten Tablettkörper (1) und einer oberen abnehmbaren Glocke (2), die auf wenigstens einen Teil (3) des Tabletts aufgesetzt werden kann, um zwischen dem Tablettkörper (1) und der Glocke (2) einen Innenraum (4) abzugrenzen, der von einer Umfangswand (5) umgeben ist und die zu erwärmenden Nahrungsmittel enthalten kann, mit wenigstens einem Zwischenelement (24) aus einem Material, welches durch magnetische Induktion wieder aufwärmbar ist, angeordnet in dem Innenraum (4), dadurch gekennzeichnet, daß:
- der Tablettkörper (1) aus einer Basisstruktur (6) aus einem Kunststoffmaterial besteht, welche eine äußere tiefgesetzte Fläche (7) und Ränder (8) bildet und wenigstens auf dem die Glocke (2) aufnehmenden Teil (3) mit einer oberen Diffusionsbeschichtung (19) aus einem unmagnetischen Metall guter Leitfähigkeit für die Wärme versehen ist, die auf die Basisstruktur (6) übertragen wird,
- die Glocke (2) eine äußere Umhüllung (22) aus einem Kunststoffmaterial aufweist, welches mit einer unteren Diffusionsbeschichtung (23) aus einem unmagnetischen Metall guter Wärmeleitfähigkeit in einem Stück ausgebildet ist, welche ihrerseits mit wenigstens einem Zwischenelement (24) aus einem Metall in Berührung ist, das durch magnetische Induktion wieder aufwärmbar ist,
- die obere Diffusionsbeschichtung (19) des Tablettkörpers (1) in Berührung kommt mit der unteren Diffusionsbeschichtung (23) der Glocke (2) an dem Umfang des Innenraumes (4) an den Bereichen der betreffenden umfangseitigen Berührungsränder (121, 126) der oberen (19) und unteren (23) Diffusionsbeschichtungen.

2. Tablett nach Anspruch 1, dadurch gekennzeichnet, daß wenigstens zwei Öffnungen (28, 29) an gegenübertiegenden Bereichen des tiefgesetzten Teils der Umfangswand (5) vorgesehen sind, welche den Innenraum (4) umgibt.

3. Tablett nach Anspruch 2, dadurch gekennzeichnet, daß die Öffnungen (28, 29) Kerben bzw. Nuten sind oder Verformungen, die in dem Berührungsrand der Glocke (2) oder des Tablettkörpers (1) vorgesehen sind.

4. Tablett nach einem der Ansprüche 1 bis 3, dadurch gekennzeichnet, daß die Diffusionsbeschichtungen (19, 23) aus Aluminium sind.

5. Tablett nach Anspruch 4, dadurch gekennzeichnet, daß die Diffusionsbeschichtungen (19, 23) an wenigstens ihrer Sichtfläche (20) mit einer Beschichtung aus schwarzem Polytetrafluoräthylen oder schwarzem Email bedeckt sind.

6. Tablett nach einem der Ansprüche 1 bis 5, dadurch gekennzeichnet, daß das Element (24) aus einem Material, welches durch magnetische Induktion wieder aufwärmbar ist, aus ferritischen, nicht oxidierbarem Stahl des Typs F17 besteht.

7. Tablett nach einem der Ansprüche 1 bis 6, dadurch gekennzeichnet, daß das Element (24) aus einem Material, welches durch magnetische Induktion wieder aufwärmbar ist, durch ein Tiefziehen mit der korrespondierenden Diffusionsbeschichtung (23) aus einem Stück besteht.

8. Tablett nach einem der Ansprüche 1 bis 7, dadurch gekennzeichnet, daß der Tablettkörper (1) aus einer Basisstruktur (6) aus einem wärmehärtbaren Kunststoffmaterial besteht, welches mit der vorgeformten Diffusionsbeschichtung (19), verbunden ist, wobei die Ränder (21) der Diffusionsbeschichtung (19) in das Kunststoffmaterial der Basisstruktur (6) umgefalzt sind.

9. Tablett nach einem der Ansprüche 1 bis 8, dadurch gekennzeichnet, daß die Glocke (2) eine äußere Umhüllung (22) aus einem Kunststoffmaterial aufweist, welche mit der vorgeformten Diffusionsbeschichtung (23) verbunden ist, wobei die Ränder (25) der äußeren Umhüllung (22) in eine umgebogene Randleiste (26) der Diffusionsbeschichtung (23) eingeklebt sind.

10. Tablett nach einem der Ansprüche 1 bis 9, dadurch gekennzeichnet, daß die äußere Umhüllung (22) und die Diffusionsbeschichtung (23) der Glocke (2) an ihren Rändern aus einem Stück sind, wobei zwischen der äußeren Umhüllung (22) und der Diffusionsbeschichtung (23) in dem zentralen Teil der Glocke (2) ein Luftstreifen (27) vorhanden ist.

11. Tablett nach einem der Ansprüche 1 bis 10, dadurch gekennzeichnet, daß es einen Bereich (3) zum wiederholten Aufwärmen von Nahrungsmitteln aufweist, welcher mit den Diffusionsbeschichtungen (19, 23) und mit der Beschichtung (24) aus einem durch Induktion wieder aufwärmbaren Material versehen ist, und einen getrennten Bereich (30), welcher die Diffusionsbeschichtungen und das durch Induktion wieder aufwärmbare Material nicht aufweist, wobei der Tablettkörper (1) eine umfangseitige Randleiste (8) aufweist, die generell flach ist für eine Übereinstimmung zum Eingriff in Gleit- bzw. Laufschienen (16) eines Trägerwagens (11), und wobei die Randleiste (8) Ausstülpungen oder Verformungen (33) aufweist, welche den Tablettkörper (1) in einem vorbestimmten Sinn zwangsläufig in die Gleit- bzw. Laufschienen (16) einsetzen lassen, um den Bereich (3) für ein wiederholtes Aufwärmen von Nahrungsmitteln genau richtig mit den Erzeugermitteln (18) für eine magnetische Induktion einer festen Konsole (17) zu positionieren.
